# EUROPÄISCHE PATENTSCHRIFT

(11) **EP 1 453 719 B1**
(45) Veröffentlichungstag und Bekanntmachung des Hinweises auf die Patenterteilung: **28.09.2005**
(21) Anmeldenummer: 02796556.5
(22) Anmeldetag: 02.12.2002
(51) Int. Cl.: B62D 5/04, B62D 6/04

(54) **LENKUNG MIT UMLAUFGETRIEBE UND ANTRIEB ZUM AUFPRÄGEN EINES BESTIMMTEN HANDMOMENTS AM LENKRAD**
STEERING MECHANISM WITH PLANETARY GEAR SYSTEM AND DRIVE FOR IMPRESSING SPECIFIC HAND TORQUE ON THE STEERING WHEEL
SYSTEME DE DIRECTION DOTE D'UN ENGRENAGE PLANETAIRE ET D'UN MECANISME D'ENTRAINEMENT PERMETTANT D'APPLIQUER UN COUPLE MANUEL DETERMINE AU VOLANT DE DIRECTION

(30) Priorität: 11.12.2001 DE 10160717
(43) Veröffentlichungstag der Anmeldung: 08.09.2004
(73) Patentinhaber: ThyssenKrupp Presta SteerTec GmbH, 40476 Düsseldorf (DE)
(72) Erfinder: HERMANN, Jochen, 73312 Geisslingen (DE); HAMMEL, Klaus, von, 70619 Stuttgart (DE); STARBEK, Roman, Frank, 73733 Esslingen (DE); NIESSEN, Harwin, 73230 Kirchheim und Teck (DE); VOHMANN, Martin, 73730 Esslingen-Zell (DE)
(74) Vertreter: Gerber, Wolfram
(86) Internationale Anmeldenummer: PCT/EP2002/013603
(87) Internationale Veröffentlichungsnummer: WO 2003/053764

(56) Entgegenhaltungen:
- US-A- 4 556 116
- US-A- 4 751 976
- US-A- 5 236 335

## Beschreibung

Die vorliegende Erfindung betrifft eine Kraftfahrzeuglenkung mit den Merkmalen des Oberbegriffs des Anspruchs 1.

Aus der DE 40 31 316 A1 ist eine gattungsgemäße Lenkung bekannt. Hier wird ein Überlagerungsgetriebe in der Lenksäule vorgeschlagen, das abhängig von der Lenkwinkelgeschwindigkeit über einen elektrischen Antriebsmotor dem mit der Ausgangsseite des Betriebes verbundenen Lenkgetriebe und damit den gelenkten Rädern einen zusätzlichen Lenkwinkel aufprägt. So kann das Übersetzungsverhältnis der Lenkung variiert werden. Außerdem kann bei Eingriffen eines Stabilitätskontrollprogramms ein Lenkeingriff unabhängig von dem Lenkwunsch des Fahrers erfolgen.

Diese zusätzlichen Lenkeingriffe bewirken aufgrund der Verkopplung von Lenkrad und Lenkgetriebe eine zusätzliche selbstständige Drehung des Lenkrades. Daher muß die Eingangsseite des Überlagerungsgetriebes während des autonomen Lenkeingriffs abgestützt werden.

Dieses unvermittelt auftretende Drehmoment ist nachteilig. Insbesondere ist das System nahezu unwirksam, wenn der Fahrer keine Hand am Lenkrad hat oder das Lenkrad beispielsweise in Geradeausfahrt nur mit sehr geringer Kraft führt.

Die DE 43 04 664 offenbart eine Lenkung für Kraftfahrzeuge, ein Umlaufgetriebe aufweisend, welches eingangseitig mit der Lenksäule und ausgangseitig mit dem Lenkgetriebe verbunden ist, wobei über einen Antrieb ein automatischer Lenkeingriff möglich ist, wobei ein Soll-Istwert-Regelung einen weiterer Antrieb ansteuert, um das Lenkrad während des automatischen Lenkeingriffs nahezu ruhig zu halten, so dass der Fahrer den automatischen Lenkeingriff nicht spürt.

Die DE 41 42 055 offenbart ein Vorderrad-Lenksystem, bei dem ein Freiraum zwischen der Lenksäule und der Ritzelwelle vorliegt, so dass diese beiden Bauteile außer Anlage sind, wenn die relative Winkellage dieser beiden Bauteile innerhalb eines Bereiches des Winkels Θ₁ ist. Ein Antriebsmotor treibt die Ritzelwelle innerhalb des Bereiches des Winkels Θ₁ und eine mechanische Kupplung überträgt die Antriebskraft vom Antriebsmotor auf die Ritzelwelle. Innerhalb des Winkels erzeugt ein weiterer Motor eine Rückstellkraft auf die Lenksäule zur Erzeugung eines Handmoments. Diese Kupplung ist so ausgelegt, dass sie durch die Lenkkraft eines Fahrers getrennt wird, wenn der Relativwinkel den Winkel Θ₁ übersteigt.

Es ist daher Aufgabe der vorliegenden Erfindung, eine gattungsgemäße Lenkung mit einem Umlaufgetriebe zwischen Lenksäule und Ritzelwelle so zu verbessern, dass Rückwirkungen eines autonomen Lenkeingriffs verringert oder ganz kompensiert werden können und die Erzeugung eines der Fahrsituation entsprechenden Handmoments möglichst einfach zu realisieren ist.

Diese Aufgabe wird erfindungsgemäß von einer Lenkung mit den Merkmalen des Anspruchs 1 gelöst. Weitere vorteilhafte Ausgestaltungen ergeben sich durch die Merkmale der Unteransprüche.

Bei der erfindungsgemäßen Kraftfahrzeuglenkung handelt es sich vom Regelungs- und Steuerungskonzept her im Prinzip um eine Steer-by-wire-Lenkung, bei der jedoch eine mechanische Kopplung zwischen dem Lenkrad und den gelenkten Rädern für den Notbetrieb, d.h. bei Ausfall des Handmomentenstellers oder des Lagereglers für die Zahnstangen- bzw. Räderverstellung vorhanden ist. Die Entkopplung zwischen Handmomentensteller und Lageregler wird vorteilhaft durch das sich frei drehbar gelagerte Gehäuse des Umlaufgetriebes erzielt. Die Regelungen bzw. Steuerungen unterhalb und oberhalb des Umlaufgetriebes beeinflussen sich deshalb nicht oder nur gering, da Bewegungen an der Eingangs- oder Ausgangswelle durch Drehung des Gehäuses des Umlaufgetriebes ausgeglichen werden, ohne daß sich derartige Verdrehungen an der anderen Welle wesentlich bemerkbar machen.

Ein mechanischer Durchgriff als eine Rückfallebene bei einem Störzustand ist dann gegeben, wenn das Gehäuse im Störfall festgesetzt ist. Dies erfolgt vorteilhaft mittels Reib- oder Formschluß. Der Reibschluß kann z.B. mittels einer Scheiben- oder Trommelbremse realisiert werden. Der Reibschluß kann jedoch auch mittels zweier Kupplungsscheiben erfolgen, die durch Federn im Störzustand gegeneinander gedrückt werden. Im normalen störungsfreien Fahrbetrieb wird dabei ein Kupplungselement mit Hilfe einer Spule entgegen der Federkraft nach dem elektromagnetischen Prinzip verstellt, wodurch die Kupplung gelöst ist und das Gehäuse des Umlaufgetriebes frei drehen kann. Ein Kupplungselement kann vorteilhaft z.B. in das Gehäuse integriert, an diesem befestigt oder durch dieses selbst gebildet sein. Ein Formschluß kann dagegen z.B. über verzahnte Kupplungselemente realisiert werden. Auch ist es möglich federbelastete Bolzen vorzusehen, die bei Ausfall einer Komponente durch Federn automatisch mit dem Gehäuse einen Formschluß bilden, in dem sie z.B. in Aussparung oder Bohrungen des Gehäuses hineingreifen.

Mit Hilfe eines Antriebs wird vorteilhaft das Handmoment generiert, wobei bei Vorhandensein eines Momentensensors eine Momentenregelung vorgesehen werden kann. Sofern kein Momentensensor vorhanden ist, kann das Handmoment auch mittels einer Momentensteuerung eingestellt werden. Der Antrieb wirkt dabei auf das Lenkgestänge zwischen Umlaufgetriebe und Lenkrad. Der Antrieb zur momentengeregelten Lenksäule ist aus regelungstechnischer Sicht vorteilhaft möglichst dicht an der Lenksäule und dem Lenkrad anzuordnen.

Durch das sich frei drehende Gehäuse des Umlaufgetriebes, welches vorteilhaft als Planetengetriebe ausgebildet ist, müssen die kinematischen Beziehungen des Umlaufgetriebes für den Momentenregler bzw. die Momentensteuerung sowohl im normalen Fahrbetrieb als auch bei einem Eingriff eines Fahrzeugstabilitätsprogramms (ESP) nicht mehr berücksichtigt werden, wodurch sich der Regelalgorithmus wenig aufwendig gestaltet und die Optimierung des Reglers relativ problemlos möglich ist. Im einfachsten Fall ist der Momentenregler ein PID-Regler. Es ist jedoch ebenso möglich den Momentenregler als Zustandsreger auszulegen.

Sofern ein Fahrzeugstabilitätsprogramm einen Zusatzlenkwinkel aufprägt, wird die Zahnstange von der Lage-Regelung entsprechend vom Servoantrieb verstellt. Eine Rückwirkung auf das Lenkrad wird durch das sich frei drehende Gehäuse des Umlaufgetriebes weitgehend und mit Hilfe der Handmomentensteuerung bzw. -regelung vollständig kompensiert, so dass die das Fahrzeug lenkende Person den autonomen Lenkeingriff des Fahrzeugstabilitätsprogramms vorteilhaft nicht spürt. In einer besonderen Ausführungsform ist jedoch problemlos möglich, der Person insbesondere während des autonomen Lenkeingriffs des Fahrzeugstabilitätsprogramms dessen Aktivität auch über das Lenkrad mitzuteilen. Hierfür kann, ähnlich dem Vibrieren bzw. Rütteln des Bremspedals beim ansprechenden Anti-Blockier-System, dem normalen Handmoment ein zusätzliches Handmoment oder Momentenverlauf überlagert werden, wodurch z.B. ein Vibrieren am Lenkrad zu spüren ist.

Der Antrieb zur Generierung des Handmoments ist vorteilhaft über ein nicht-selbsthemmendes Getriebe mit der Lenksäule oder direkt dem Lenkrad in Wirkverbindung, so daß auch bei Ausfall des Antriebs und mechanischem Durchgriff vom Lenkrad zum Lenkritzel das Lenkrad von der fahrenden Person lenkbar ist.

Nachfolgend wird anhand von Figuren ein Ausführungsbeispiel einer erfindungsgemäßen Kraftfahrzeuglenkung näher erläutert.

Es zeigen:
- Fig. 1:: eine erfindungsgemäße Kraftfahrzeugslenkung in einer schematischen Darstellung;
- Fig. 2:: eine Kraftfahrzeuglenkung gemäß Figur 1 mit zugehörigem Regelungskonzept.
- Fig. 3a u. 3b:: einen Hohlwellenmotor zum direkten Antrieb der Lenksäule.

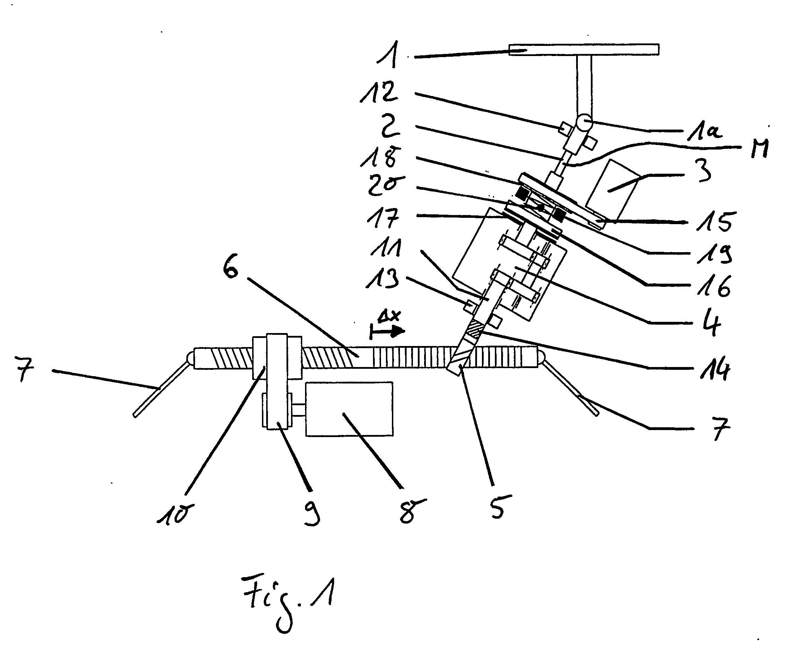

In der Figur 1 ist eine erfindungsgemäße Kraftfahrzeuglenkung schematisch veranschaulicht. Die Lenkung weist ein Lenkrad 1 auf, das drehfest z. B. über ein Kardangelenk la auf eine Eingangswelle 2 eines Umlaufgetriebes 4 wirkt. Das Umlaufgetriebe 4 hat weiter eine Ausgangswelle 11, die mit einem Lenkritzel 5 verbunden ist. Das Lenkritzel 5 wiederum kämmt in an sich bekannter Weise mit einer Zahnstange 6, die im Bereich der gelenkten Achse eines Kraftfahrzeuges über Spurstangen 7 bei Drehung des Lenkritzels 5 eine Radwinkeländerung der gelenkten Räder bewirkt.

Das Umlaufgetriebe 4, welches als Planetengetriebe ausgebildet sein kann, trägt an einer Außenseite einen Antrieb 3 in Form eines Elektromotors, der über ein Riemenantrieb 15, 18 die Lenksäule 2 antreibt. Ein elektrischer Servoantrieb 8 ist der Zahnstange 6 zugeordnet und wirkt über ein Ritzel 9 und einen Zahnriemen auf einen Kugelumlauf 10, der mit einem daran angepaßten Gewinde in Eingriff steht, so dass eine Drehung des Kugelumlaufs 10 ebenfalls eine Verlagerung Δx der Zahnstange 6 und damit eine Radwinkeländerung bewirkt.

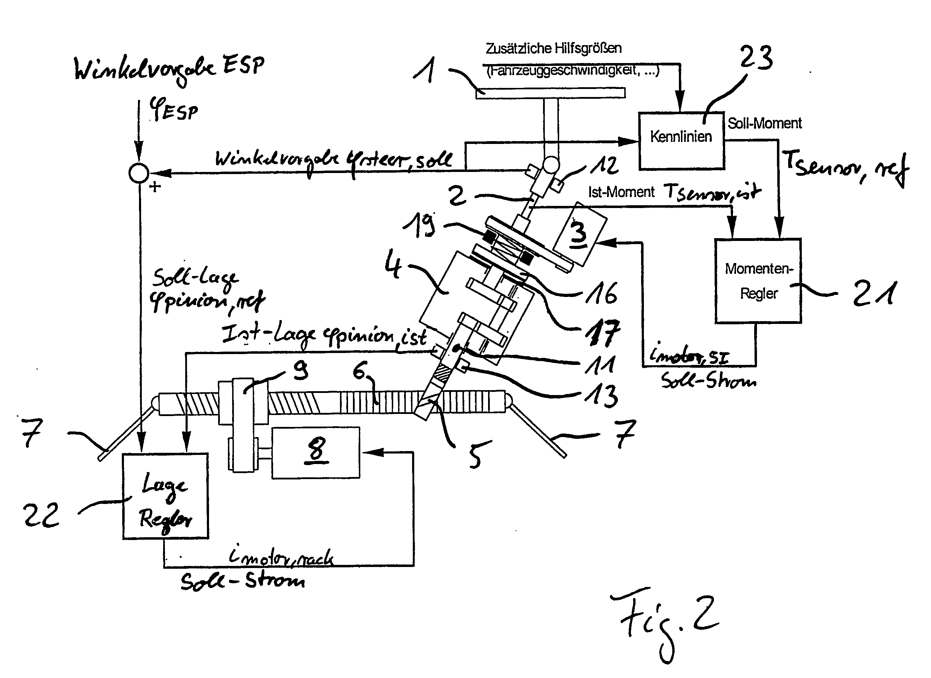

Ein an der Lenksäule 2 angeordneter Winkelsensor 12 ermittelt die Stellung des Lenkrads 1 und erzeugt ein entsprechendes Signal, welches wie in Fig. 2 dargestellt dem Lageregler 22 zur Verstellung der Zahnstange 6, sowie dem Momentenregler 21, 23 zur Einregelung des Handmoments zugeführt wird. In der Lenksäule 2 ist zudem ein Momentensensor M angeordnet, der das am Lenkrad 1 angreifende Handmoment ermittelt. Die Signale des Momentensensors M stellen ebenfalls eine Eingangsgröße des Momentenreglers 21 dar. Sofern statt einer Momentenregelung eine Momentensteuerung eingesetzt wird, kann der Momentensensor M entfallen.

Damit ein mechanischer Durchgriff im Störungsfall vom Lenkrad 1 hin zum Lenkritzel 5 möglich ist, wird das Gehäuse des Umlaufgetriebes 4 im Störungsfall festgesetzt. Hierzu dient eine Kupplung, deren Kupplungselemente 16, 17 im Störungsfall mittels einer Federkraft 20 zusammengedrückt werden. Durch das Aneinanderdrücken der Kupplungselemente 16, 17 kann entweder ein Formschluß und/oder ein Reibschluß erzeugt werden. Im normalen ungestörten Fahrbetrieb erzeugt eine Stromdurchflossene Spule ein Magnetfeld, durch das das eine Kupplungselement 16 entgegen der Federkraft 20 entfernt von dem Kupplungselement 17 gehalten ist, so daß sich das Gehäuse des Umlaufgetriebes 4 frei drehen kann. Im Störungsfall wird die Spule 20 nicht bestromt, wodurch die Feder 20 die Kupplungselemente 16, 17 gegeneinander preßt. Der Formschluß läßt sich z.B. leicht durch eine Verzahnung der Kupplungselemente erzielen.

Zwischen Lenkritzel 5 und Ausgangswelle 11 des Umlaufgetriebes 4 kann zur besseren Entkopplung von Lage-Regler 22 und Momentenregler 21, 23 ein Dämpfungsglied angeordnet werden.

Je nach Regelungskonzept und Vorhandensein eines Momentensensors wird das Handmoment entweder gesteuert (kein Momentensensor vorhanden) oder eingeregelt (Momentensensor vorhanden). Zur Momentenregelung ist das Messen mindestens eines Moments im Strang zwischen dem Ritzel und dem Lenkrad notwendig.

Wie in Fig. 2 dargestellt, wird die Verdrehung des Lenkrads 1 mittels des Winkelsensors 12 ermittelt, der die Sollgröße ϕ_{steer,soll} erzeugt. Diese Sollgröße ist gleichzeitig Eingangsgröße für das Kennlinienfeld 23. Eventuell dienen zusätzliche Hilfsgrößen, wie z.B. die Fahrzeugsgeschwindigkeit, als zusätzliche Eingangsgrößen für das Kennlinienfeld 23, mittels dem das Referenzsignal T_{sensor,ref} (Soll-Moment) erzeugt wird und die Eingangsgröße für die Momentensteuerung 21, die die Regelgröße i_{Motor,SI} für den Antrieb 3 erzeugt. Dadurch, daß das Gehäuse des Umlaufgetriebes frei drehen kann, wirkt sich ein Verdrehen des Ritzels 5 nicht oder nur geringfügig auf das Handmoment aus. Umgekehrt bewirkt eine Verdrehung der Lenksäule 2 durch den Antrieb 3 kein störendes Moment auf das Lenkritzel 5. Von der Momentensteuerung ist daher der Lageregler 22 entkoppelt, welcher zur Verstellung der Zahnstange 6 dient. Die Zahnstange 6 ist über die Spurstangen 7 mit den gelenkten Rädern (nicht dargestellt) verbunden, wodurch die Verstellung der Zahnstange 9 zu einer Verstellung der gelenkten Räder führt. Der Sollgröße ϕ_{steer,soll} wird der Zusatzwinkel ϕ_{ESP} aufgeschaltet. Die Summe dieser beiden Winkelgrößen ist eine Eingangsgröße ϕ_{pinion,ref} des Lagereglers 22. Eine weitere Eingangsgröße des Lagereglers 22 ist entweder die Stellung des Ritzels 5 oder die Stellung der Zahnstange 6. In der Figur 2 wird die Winkelstellung des Ritzels 5 mittels des Winkelsensors 13 gemessen, wobei der Winkelsensor 13 das Ist-Signal ϕ_{Pinion,ist} an den Lagerregler 22 weitergibt. Der Lageregler 22 erzeugt den Sollstrom i_{motor,rack}, der zur Steuerung des Rack-Motors 8 dient.

Die in Figur 2 dargestellte Momentenregelung weist als Eingangsgröße das am Lenkrad 1 anliegende Handmoment auf, welches mittels des Momentensensors M, welcher das Signal T_{sensor,ist} erzeugt, auf. Der Momentensensor M kann an beliebiger Stelle in der Lenkung oberhalb des Umlaufgetriebes 4 angeordnet sein. Es ist jedoch sinnvoll den Sensor M möglichst dicht am Lenkrad 1 anzuordnen, damit der Momentenregler 21 möglichst einfach realisiert werden kann.

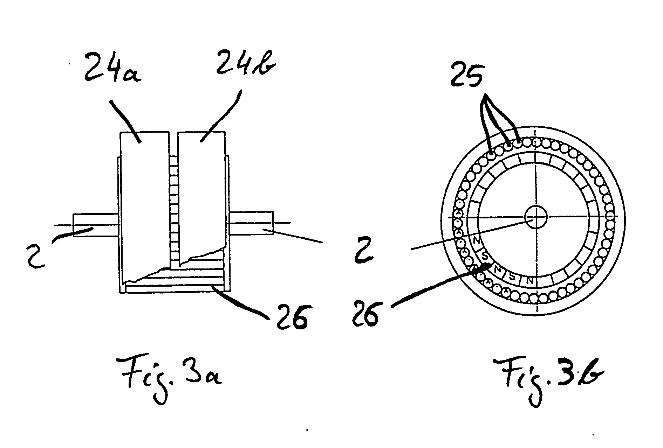

Die Figuren 3a und 3b zeigen zwei verschiedene Ansichten eines alternativen Antriebs zur Generierung des Handmoments mittels zweier Elektromotoren 24a, 24b, deren gemeinsamer Rotor 26 mit der Lenksäule 2 starr verbunden ist. Sie bilden ein redundantes System, wobei die Motoren 24a, 24b so dimensioniert sind, daß jeweils ein Motor das Handmoment erzeugen kann.

## Patentansprüche

1. Kraftfahrzeuglenkung mit folgenden Elementen:
- einem Lenkrad (1), das drehfest mit einer Lenksäule (2) verbunden ist;
- einem Lenkritzel (5), das mit einer Zahnstange (6) kämmt;
- einem eingangsseitig mit der Lenksäule (2) und ausgangsseitig mit dem Lenkritzel (5) verbundenen Umlaufgetriebe (4);
- einem Winkelsensor (12) zur Erfassung der Stellung der Lenksäule (2) bzw. des Lenkrads (1) und Generierung eines entsprechenden Signals;
- einem Antrieb (3), mit dem direkt auf die Lenksäule (2) ein Moment aufbringbar ist;
- einem weiteren Antrieb (8), der von einer elektronischen Steuerung (22) angesteuert wird und der auf das Lenkritzel (5) oder auf die Zahnstange (6) wirkt, und daß das Signal des Winkelsensors (12) zur Erfassung der Stellung der Lenksäule (2) bzw. des Lenkrads (1) ein Eingangssignal für die Steuerung ist,
**dadurch gekennzeichnet, dass** im normalen ungestörtem Fahrbetrieb das Gehäuse des Umlaufgetriebes (4) frei drehbar ist und dass eine Steuerung (21, 23) den Antrieb (3) derart ansteuert, daß sich ein der Fahrsituation entsprechendes Handmoment zur Erzielung eines bestimmten Fahrgefühls beim Fahrer am Lenkrad (1) einstellt.

2. Kraftfahrzeuglenkung nach Anspruch 1, **dadurch gekennzeichnet, dass** mittels einer Bremse (16, 17) das Gehäuse des Umlaufgetriebes (4) abbremsbar und/oder festsetzbar ist.

3. Kraftfahrzeuglenkung nach einem der vorhergehenden Ansprüche, **dadurch gekennzeichnet, dass** bei Störung des Antriebs (3) oder dessen zugehöriger Komponenten die Bewegung des Gehäuses des Umlaufgetriebes (4) form- oder reibschlüssig blockiert wird.

4. Kraftfahrzeuglenkung nach einem der vorhergehenden Ansprüche 1 bis 3, **dadurch gekennzeichnet, dass** bei Störung des Antriebs (3) oder dessen zugehöriger Komponenten die Relativbewegung zwischen Gehäuse des Umlaufgetriebes (4) und Lenksäule (2) oder zwischen Gehäuse und Lenkritzel (5) blockiert wird.

5. Kraftfahrzeuglenkung nach einem der vorhergehenden Ansprüche, **dadurch gekennzeichnet, dass** ein Momentensensor (M) das am Lenkrad (1) angreifende Handmoment erfaßt und ein entsprechendes Signal erzeugt.

6. Kraftfahrzeuglenkung nach einem der vorhergehenden Ansprüche, **dadurch gekennzeichnet, dass** eine Momentenregelung (21, 23) anhand des Signals des Winkelsensors (12) und/oder des Signals des Momentensensors (M) den Antrieb (3) ansteuert.

7. Kraftfahrzeuglenkung nach Anspruch 6, **dadurch gekennzeichnet, dass** weitere Zustandsgrößen des Fahrzeugs Eingangsgrößen für die Momentenregelung (21, 23) bilden.

8. Kraftfahrzeuglenkung nach einem der vorherigen Ansprüche, **dadurch gekennzeichnet, dass** der Antrieb ein Hohlwellenmotor (24a, 24b) ist, dessen Rotor (26) mit der Lenksäule (2) fest verbunden ist.

9. Kraftfahrzeuglenkung nach einem der vorherigen Ansprüche 1 bis 7, **dadurch gekennzeichnet, dass** der Antrieb die Lenksäule (2) über ein zwischengeschaltetes Getriebe und/oder über Riemen (15), insbesondere Zahnriemen, antreibt.

10. Kraftfahrzeuglenkung nach einem der vorhergehenden Ansprüche, **dadurch gekennzeichnet, dass** ein weiterer redundanter Antrieb bei Ausfall oder Störung des ersten Antriebs zur Handmomentengenerierung vorgesehen ist.

## Claims

1. Motor vehicle steering mechanism with the following components:
- a steering wheel (1), which is rigidly connected to a steering column (2);
- a steering pinion (5), which is meshed with a steering rack (6);
- a planetary gear system connected on the input side to the steering column (2) and on the output side to the steering pinion (5) ;
- an angle sensor (12) for detecting the position of the steering column (2) and/or the steering wheel (1) and for generating a signal representative thereof;
- drive (3) with which a torque can be applied directly to the steering column (2);
- an additional drive (8), which is controlled by an electronic control system (22) and which acts on the steering pinion (5) or the steering rack (6) and that the signal of the angle sensor (12) for detecting the position of the steering column (2) and/or the steering wheel (1) is an input signal for the control system, **characterised in that** in the normal trouble-free driving operation, the housing of the planetary gear system (4) is free to rotate and **in that** a torque adjuster (21), (23) controls the drive (3) in such a way that hand torque corresponding to the driving situation is produced for achieving a defined feel for the driver on the steering wheel (1).

2. Motor vehicle steering mechanism according to Claim 1, **characterised in that** the housing of the planetary gear system (4) can be decelerated and/or stopped by means of a brake (16, 17).

3. Motor vehicle steering mechanism according to any one of the preceding claims, **characterised in that** if the drive (3) or its associated components fail the movement of the housing of the planetary gear system (4) is prevented by positive or by frictional engagement.

4. Motor vehicle steering mechanism according to any one of the preceding Claims 1 to 3, **characterised in that** if the drive (3) or its associated components fail the relative movement between housing of planetary gear system (4) and steering column (2) or between housing and steering pinion (5) is prevented.

5. Motor vehicle steering mechanism according to any one of the preceding claims, **characterised in that** a torque sensor (M) detects the hand torque impressed on the steering wheel (1) and generates a representative signal.

6. Motor vehicle steering mechanism according to any one of the preceding claims, **characterised in that** a torque adjuster (21, 23) controls the drive (3) on the basis of the signal of the angle sensor (12) and/or the signal of the torque sensor (M).

7. Motor vehicle steering mechanism according to Claim 6, **characterised in that** other variables of the vehicle form input quantities for the torque adjuster (21, 23).

8. Motor vehicle steering mechanism according to any one of the preceding claims, **characterised in that** the drive is a hollow shaft motor (24a, 24b), the rotor (26) of which is firmly connected to the steering column (2).

9. Motor vehicle steering mechanism according to any one of the preceding Claims 1 to 7, **characterised in that** the drive moves the steering column (2) by means of an intermediate gear and/or by means of belts (15), in particular toothed belts.

10. Motor vehicle steering mechanism according to any one of the preceding claims, **characterised in that** a further redundant drive is provided for generating hand torque in case of failure or malfunction of the first drive.

## Revendications

1. Système de direction de véhicule avec les éléments suivants :
◆ un volant (1) qui est relié à une colonne de direction (2) de manière à résister à la torsion ;
◆ un pignon de commande (5) qui s'engrène dans une crémaillère (6) ;
◆ un engrenage planétaire (4) relié à la colonne de direction (2) du côté de l'entrée et au pignon de commande (5) du côté de la sortie ;
◆ un détecteur angulaire (12) pour la détection de la position de la colonne de direction (2) ou du volant (1) et pour la génération d'un signal correspondant ;
◆ un mécanisme d'entraînement (3) avec lequel un couple peut être appliqué directement sur la colonne de direction (2) ;
◆ un autre mécanisme d'entraînement (8) qui est commandé par un système de commande électronique (22) et qui agit sur le pignon de commande (5) ou sur la crémaillère (6) et le signal du détecteur angulaire (12) pour la détection de la position de la colonne de direction (2) ou du volant (1) est un signal d'entrée pour le dispositif de commande,
**caractérisé en ce que**, en condition de conduite non perturbée, le carter de l'engrenage planétaire (4) peut tourner librement et **en ce qu'**un dispositif de commande (21, 23) commande le mécanisme d'entraînement (3) de telle manière qu'un couple manuel correspondant à la condition de conduite soit réglé pour obtenir une sensation de conduite déterminée par le conducteur au volant (1).

2. Système de direction de véhicule selon la revendication 1, **caractérisé en ce que** le carter de l'engrenage planétaire (4) peut être freiné et/ou serré à l'aide d'un frein (16, 17).

3. Système de direction de véhicule selon l'une quelconque des revendications précédentes, **caractérisé en ce que**, en cas de perturbation du mécanisme d'entraînement (3) ou de ses composants associés, le déplacement du carter de l'engrenage planétaire (4) est bloqué par engagement positif ou par friction.

4. Système de direction de véhicule selon l'une quelconque des revendications précédentes 1 à 3, **caractérisé en ce que**, en cas de perturbation du mécanisme d'entraînement (3) ou de ses composants associés, le déplacement relatif entre le carter de l'engrenage planétaire (4) et la colonne de direction (2) ou entre le carter et le pignon de commande (5) est bloqué.

5. Système de direction de véhicule selon l'une quelconque des revendications précédentes, **caractérisé en ce qu'**un détecteur de couple (M) détecte le couple manuel appliqué sur le volant (1) et génère un signal correspondant.

6. Système de direction de véhicule selon l'une quelconque des revendications précédentes, **caractérisé en ce qu'**une régulation de couple (21, 23) commande le mécanisme d'entraînement (3) à l'aide du signal du détecteur angulaire (12) et/ou du signal du détecteur de couple (M).

7. Système de direction de véhicule selon la revendication 6, **caractérisé en ce que** d'autres grandeurs d'état du véhicule constituent des grandeurs d'entrée pour la régulation de couple (21, 23).

8. Système de direction de véhicule selon l'une quelconque des revendications précédentes, **caractérisé en ce que** le mécanisme d'entraînement est un moteur à arbre creux (24a, 24b) dont le rotor (26) est relié fixement à la colonne de direction (2).

9. Système de direction de véhicule selon l'une quelconque des revendications précédentes 1 à 7, **caractérisé en ce que** le mécanisme d'entraînement entraîne la colonne de direction (2) par l'intermédiaire d'un engrenage intercalé et/ou par l'intermédiaire de courroies (15), en particulier des courroies dentées.

10. Système de direction de véhicule selon l'une quelconque des revendications précédentes, **caractérisé en ce qu'**il est prévu un autre mécanisme d'entraînement redondant pour la génération du couple manuel en cas de panne ou de perturbation du premier mécanisme d'entraînement.
